# EUROPEAN PATENT APPLICATION

(11) **EP 1 235 167 A2**
(43) Date of publication of application: **28.08.2002**
(21) Application number: 01123498.6
(22) Date of filing: 28.09.2001
(51) Int. Cl.: G06F 17/60

(54) **Closed loop electronic factoring**

(30) Priority: 15.02.2001 US 783144
(71) Applicant: Siemens Dematic AG, 90475 Nürnberg (DE)
(72) Inventor: Rosenbaum, Walter, Dr., 75116 Paris (FR)
(74) Representative: Berg, Peter

(57) **Abstract**

The present invention relates to a system and method for ensuring that secure factoring can be given to a seller system in exchange for confirmed accounts receipts. The accounts receivables may comprise orders for goods (63), which may be merchandise or a service. The confirmation is made by a post system (80), which acts as an intermediary between the seller system (60) and the purchaser (70) as well as between the seller system (60) and a financial institution (100) from which the factoring originates. The purchase may be a client system (70). The post system (80) confirms with the client system (70) ordering and identification information (71). When the post system (80) has sufficient confirmation, it sends a release message (83) to the financial institution (100) to release factoring (69) to the seller system (60). In the event a good is returned by the purchaser, the good is sent to the post system (80) that may either sell the good through other avenues (85) or return the good to the seller system (60). The post (80) further notifies (83) the financial institution (100) about the returned good and future factoring is limited. In addition, the post system (80) notifies the seller system (60) about the return.

## Description

The present invention relates to the field of communicating server and client systems and more particularly to a system and method of the two and other systems in communication for providing electronic closed loop electronic factoring (e-factoring). The present invention also relates to a system and method for introducing a level of integrity, accountability and transparency into traditional factoring systems and methods via novel use of the communicating systems.

Server and client systems often communicate via distributed networks such as the Internet, which itself comprises a vast number of linked computers and computer networks worldwide. The interlinking affords one the opportunity to exchange information via a variety of means including electronic mail, Gophers, and the World Wide Web (WWW). Via the WWW, graphical web pages containing pictures and information can be accessed and viewed on any appropriately connected and programmed computer. This is effected by accessing the unique identifier of web pages, the Uniform Resource Locator (URL). The access entails a request to the server system that supports the web page, the request being that the server forward the URL identified page to the requesting computer. Upon receipt, the requesting computer, using its browser, can view the web page. The requesting computer often operates in a client system environment.

One common application of web pages is for advertising goods and services of a retailer or vendor. Interested parties may come across the web page advertisement via Internet search engines as well as descriptive identifiers. Persons interested in acquiring the advertised good or service, may access the web page and exchange information with the retailer. The information may include not only identification of that being sought for purchase, exchange or other means of acquisition, but also an indication of preferred mode of payment and/or delivery. The ease of advertising and purchasing goods and services has led to an increased use of the Internet both by consumers and retailers.

On distributed networks, (herein referred to as Internet) those desiring to set up an on-line shop or e-shop may follow traditional business model used by traditional brick and mortar storefront retailers. The model includes: soliciting and filling orders, and effecting the delivery of the ordered good from stock, wholesaler or other supplier. Unlike traditional retailers, on-line retailers or e-retailers are not burdened with the expenses of setting up and maintaining physical store fronts with on-premises staff, displayed stock, rent, utilities and other operating expenses. Rather, with the appropriate computer equipment and programming, the e-retailer can set up a viable business on the Internet. The Internet makes the e-shop accessible worldwide and ensures immediate and discrete exchanges of information. Variations of e-shops include on-line auctioning or e-auctioning, wherein bids for displayed goods are received and goods sold and delivered accordingly.

Factoring is a common business technique whereby an establishment borrows from a financial institution operating capital and uses its physical visible assets as collateral for the loan. Enterprises without sufficient physical visible assets are generally denied a loan or granted modest amounts that may or may not be sufficient for operations. Regarding e-shops, while the above business model offers advantages, such as lower overhead, the e-shop often lacks visible assets. Therefore, the e-shop is normally disqualified from credit from traditional financial services, which normally require visible assets for collateralization.

The financing from collateralization often helps to bridge the gap between delivering a good and receiving payment for the good. For example, in the above business model, an on-line customer (e-customer) purchases a good over the Internet using his or her credit card or similar form of electronic payment. The e-retailer books the transaction and effect delivery of the good. However, the e-retailer must wait for the credit card company to process payment. If the transition is cash based, such as Cash on Delivery via the post office, the e-retailer has an even longer wait for payment as with credit card payments. When multiplied by a wanted high volume of sales, many e-retailers face difficult financial bridges where resources are spent and no remittance is forthcoming.

In a traditional retail business driven by brick and mortar store fronts, the merchandise to cash cycle is faster than in e-retail. Payment is immediate and in direct exchange for the purchased good. Hence there is little to no financial bridge to gap. In addition, credit purchases Account Receivables Factoring is a ready option given the traditional retail business' visible assets.

In the current Internet economy where many of the entrants are cash-poor, the inability to turn sales into immediate cash is a major handicap that can destroy otherwise viable operations and e-business models. In the traditional Brick & Mortar Business to Business world an analogous problem exists where sellers may ship goods on 60 or 90 day terms which means they allow customers a grace period before they need to pay their bill without interest or penalty.

In traditional retailing/wholesaling, the seller has options besides waiting for repayment. Arrangements can be made with commercial banks whereby the retailer submits copies of their account receivable invoices and gets an immediate cash advance or loan corresponding to most of the face value of the account receivables. Technically the process of turning these invoices into immediate funds is referred to as factoring and the subject invoices that have been pre-paid by the bank are referred to as assigned account receivables. When the corresponding invoices are repaid the loan is liquidated. However, the assigned accounts receivable are not the actual collateral. In most factoring transactions, a provision is made for the repayment of the factored invoices to go directly to the retailer to allow the retailer to maintain privacy about their financial arrangements. The retailer then repays the factoring cash advance as if it were a regular loan. Hence the factoring transaction is collateralized by the retailer's brick & mortar assets such as buildings and/or machinery as oppose to the accounts receivables.

In this mode of financial operation the bank is insulated from fraudulent invoices (e.g. transactions that never took place or were already assigned to another bank) and even more importantly reductions in the value of the assigned account receivables due to returned merchandise is made up for by collateral such as buildings and/or machinery.

Given that traditional Accounts Receivable Factoring is a high risk business that can only be made viable when collateralized with real assets, most e-business operations would fail to qualify for factoring to improve their cash flow because they do not have the required visible and traditional assets such as buildings and/or equipment.

An embodiment of the present invention provides a method and system for monitoring the sales transaction between an e-retailer and an e-customer and notify a lending institution of such a transaction. Based on the notification, the lending institution can decide if, when and how much factoring to provide in response to the collateral sale or accounts receivable. This process will herein be referred to as closed loop factoring. The monitoring element (herein referred to as post) of the present invention may be independent from the financial institution, e-retailer, or e-customer in order to maintain the element's impartiality. Through independent monitoring, e-retailers may receive factoring otherwise denied them for lack of collaterizable tangible assets. In addition, the financial institution may enjoy an increased level of security given the confirmation of the e-shops orders and/or accounts receivable. The post order confirmation may occur concurrently with the order (between e-customer and e-retailer) thereby being transparent to the e-customer. Likewise, with the possibility for closed loop factoring as provided by the present invention, additional e-retailers may obtain business saving assets thereby remaining operational for the benefit of e-commerce in general.

Herein, an Internet based process is disclosed whereby e-retailers can use their immediate sales as account receivables with high enough security for the lender to make traditional physical asset collateralization an unnecessary precursor to factoring. An advantage of the present invention is in the reduction of the lender's risk even below that of traditional factoring. These and other advantages are realized by the introduction of the post or delivery agent between retailer and financial institution. Given the electronic nature of the business, specifically as to delivery of goods and modes of communication, the delivery agent or post can oversee most all business transactions while maintaining the privacy and security necessary for Business to Customer (B2C) and Business to Business (B2B) transactions. The delivery agent, by having such access can effect proper delivery of the goods when the delivery agent is satisfied with the mode of payment and well as other factors. Armed with such confirmations, the delivery agent may further act to effect a crediting, loan, or factoring to the e-shop. By this arrangement, the e-shop does not have a significant financial bridge and can take advantage of a financial tool already employed by many traditional shops, namely factoring.

An additional advantage of the closed loop factoring, is that the post monitors the entire transaction cycle for the lending institution in a seamless manner that makes fraud and unaccounted returns unlikely. Key in this disclosure is that traditional factoring can be confidentially maintained in the E-Business setting which is very important in Business to Customer (B2C) and Business to Business (B2B) settings.

The present invention while described in the context of e-commerce, may also be applied to traditional brick and mortar store front commerce wherein the above advantages may still be enjoyed.
Figure 1 is a flowchart graphically depicting method steps according to an embodiment of the present invention.
Figure 2 depicts process steps related to an on-line purchase;
Figure 3 depicts process steps related to delivery of goods purchased on-line; Figure 4 depicts process steps related to confirmation of delivery;
Figure 5 depicts process steps related to return of merchandise; and
Figure 6 depicts systems and components thereof for effecting the present invention.

The present invention is set out in conjunction with the above figures, wherein like numerals refer to equivalent elements. The present invention provides a system and method for monitored and controlled factoring, herein referred to as closed loop factoring. The transaction may occur over a distributed network such as the Internet.

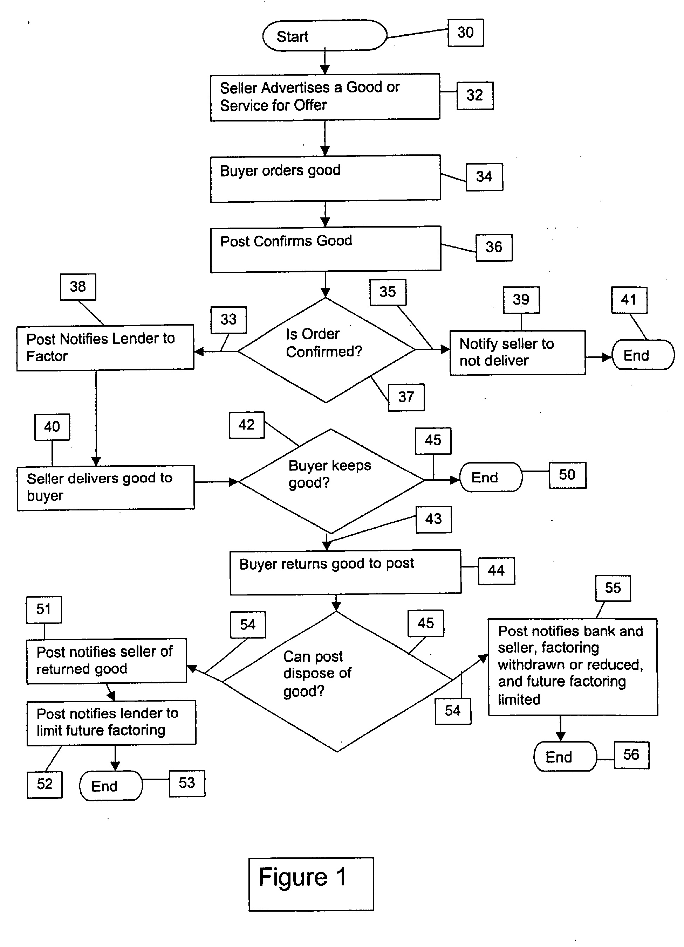

Figure 1 depicts a flowchart graphically representing an embodiment of the present invention. The order of depicted steps is particular to the embodiment and it is within the scope of the present invention that the steps are in another order. As shown, the method starts at step 30 and proceeds to step 32 wherein a good is made available to the public for offer. The availability being effected by an advertisement and the like, disseminated electronically (e.g. web page), by print, electromagnetic signal (e.g. radio, television) and the like. A buyer then places an order for the good as per step 34. The order is placed with the seller. Concurrently with the ordering the post confirms the order with the customer (step 36). The confirmation includes the steps of verifying the customer identity, payment form, and delivery plan (37). Information about the customer can also be obtained from the customer identifier used to identify persons, computers and locations when on-line. If the order is confirmed per decision step 33, a lender or bank is notified to provide factoring to the seller (38) and the seller is notified to effect delivery of the good (40). Alternatively, the post may effect delivery of the good in response to the confirmation. If the order is not confirmed (35), the seller is notified not to deliver (39) and the lender is not notified by the post to provide factoring. The closed loop factoring process then ends (41). If the buyer keeps the good 45, per decision step 42, the present method ends 50. If the buyer decides not to keep the good (43) and returns the good, the good is returned to the post (44). In response, the post attempts to dispose of the good for money, by sale, auction, and the like (45). If the good disposal is successful 49, the post notifies the seller 51 of the returned item. The post further notifies the lender to limit future factoring 52 and the present method ends 53. Where the disposal is unsuccessful 54, the post informs the lender to withdraw the factoring if possible or to limit future factoring, the seller is also informed of the return 55. The present method then ends 56.

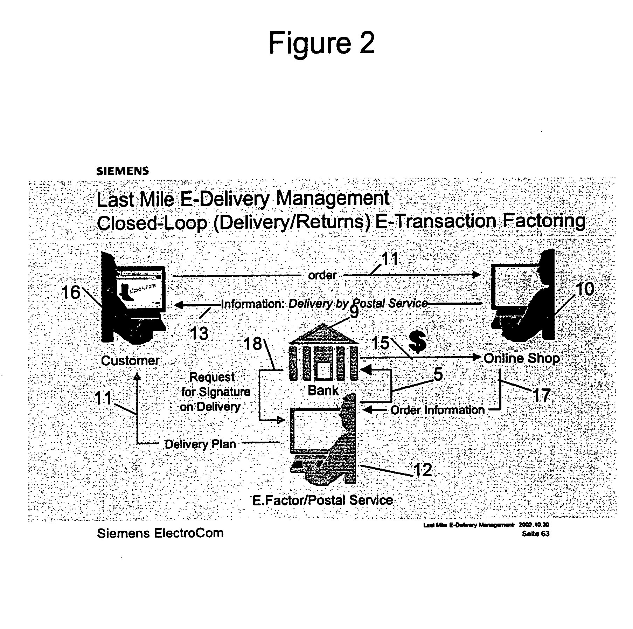

Figure 2 depicts interactions between four systems wherein an on-line purchase is effected. As shown, a sales transaction between a seller system or e-retailer 10 and an e-customer or buyer system 16. Information and/or advertisements about a good, such as a product or service, is made available (13) to the e-customer via the mail, web site, e-mail, television, or other known disseminating media. The e-customer places an order 11 for the good. The good may be an item of merchandise, a service or any other purchasable commodity. The order may be placed in direct response or independent to the disseminated information. The present embodiment sets out a direct response to disseminated information scenario. The e-retailer forwards 17 the order information to the post 12. The post may be an independent entity from the e-retailer and e-customer. The post 12 confirms a delivery plan 19 with the customer 16 as well as verifies the order information exchanged between the e-customer and e-retailer per order 11. The order information includes payment amount, payment form, customer identity and address, telephone number, social security number, and/or other information, which may be used to verify the customer, address, and payment. Upon receipt of the information, the post may verify it via cross checking with databases and other sources of information. When confirmation is obtained, the post sends an affirmative confirmation message (5) to a financial institution (9). In response, the financial institution releases funds 15, i.e. factors, the e-retailer 10. The post dialog with the customer can be done concurrently with the customer order or as part of an overall order process. The dialog can be performed instantaneously using customer identifier information and other information provided by the e-customer and/or his or her operating system. Alternatively, the dialog an be performed independently of the order transaction. The lender may authorize the post to obtain a Signature on Delivery as part of the delivery plan (18). In addition, the e-retailer may authorize the post to effect delivery of the good to the e-purchaser (not shown).

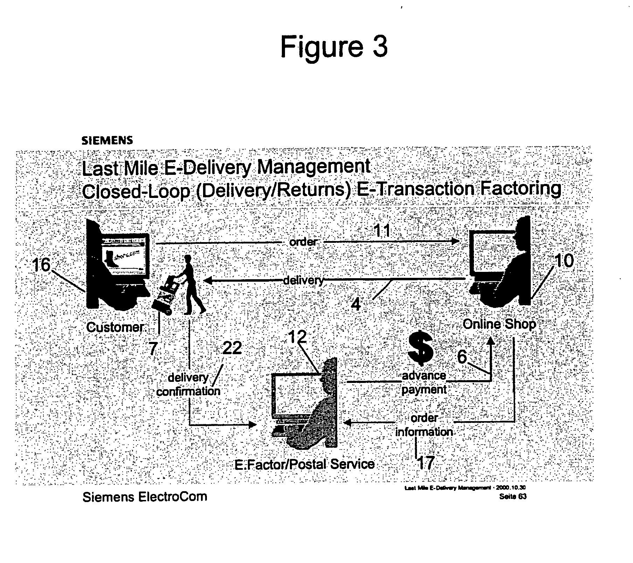

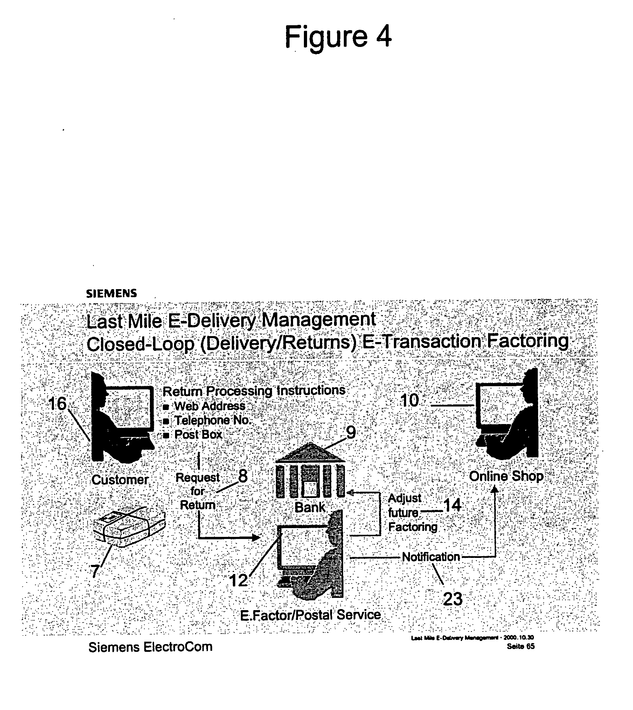

Figure 3 depicts delivery of the good between e-retailer 10 and customer 16. As shown, in response to order 11, good 7 is delivered 4 to the customer 16. The delivery may be by mail, electronic downloading, or other delivery scheme known in the art. Upon delivery, a confirmation of delivery 22 is sent to the post 12. The confirmation may originate with the customer, delivery means, electronic confirmation, and the like. Upon receipt of the confirmation, the post may release funds to the e-retailer 20, the funds originating from the financial institution (not shown in this figure). Alternatively, the post may provide advanced funds 6 to the e-retailer based on order information 17. In the event the good is returned, the post may effect a reclamation of the funds as well as implement goods returned procedures. An example of a goods returned procedure is set out in figure 4.

As shown in figure 4, the post is empowered to receive the returned good in place of the e-retailer. Herein, the good 7 is returned 8 by the e-retailer 16 to the post 12. The post, upon receiving the returned good or return request, notifies the bank 14 of the return and to adjust future factoring of the e-retailer 10. The post further sends notification 23 of the returned good to the e-retailer 10.

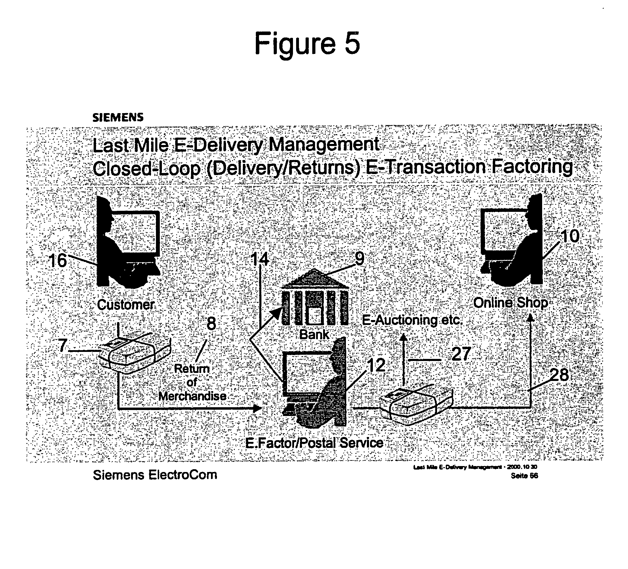

Figure 5 sets out a reclamation procedure for reclaiming funds advanced to the e-retailer. The e-customer 16 returns 8 the good 7 to the post 12. The post may then either effect an on-line auction or similar sales (27) of the good 26 or return the good to the e-retailer 28. Funds provided for the returned good, from the auction, sale, e-retailer or the like, is then routed by the post back to the financial institution 14. In response, the bank is instructed by the post to limit future factoring or withdraw factoring if possible to balance funds not recovered from the disposal 27 of the good 7.

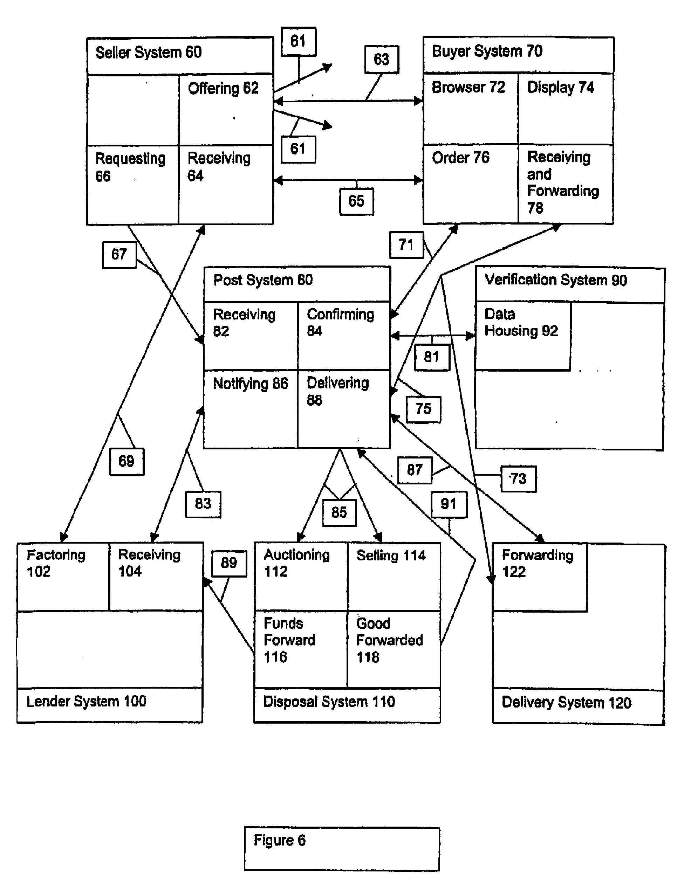

Figure 6 sets out communication among the various components of the various systems used per the present embodiment. It is understood that equivalent systems, another number of systems and alternate communication routes may be used, as envisioned by the skilled artisan to accomplish the present invention as set out above. Figure 6 sets out 7 systems: seller, buyer, post, verification, lender, disposal and delivery systems. The seller system 60 comprises three components: an offering component 62 for making information about an offered good available; a receiving 64 component for receiving orders for the good; and a requesting order for communicating with other systems. The buyer system 70 comprises four components: a browser component 72 for viewing on-line information, a display component 74 for displaying the information; an order component 76 for ordering the good; and a receiving and forwarding component 78 for communicating with other systems. The post system 80 includes four components: a receiving component 82 for receiving information from other systems; a confirming component 84 for confirming orders; a notifying component 88 for communicating with the lender system; and a delivering component 86 for effecting delivery of the good. The verification system 90 includes a data housing component 92 for housing information about potential e-customers. The lender system 100 includes two components: a factoring component 102 for providing factoring to the seller system 60 and a receiving component 104 for communicating with the post system 80. The disposal system 110 includes two components: an auctioning component 102 and selling component 104 for the disposal of goods. The delivery system 120 includes a forwarding component 122 for effecting forwarding or delivery of a good.

The various systems and components communicate as follows. The seller system 60 makes information about a good available to the public 61. The buyer system, using its browser 72, receives the information 63 and displays the information 74. If desired, the ordering component 76 and receiving component 64 effect an exchange of information, thereby effecting an order. Upon receipt of the order, the seller requesting system 66 requests 67 factoring from the post system 80, and the request being received at the receiving component 82. The confirming component 84 effects a confirmation of the order 71, including a delivery plan with the buyer system ordering component 76. The confirmation component further effects a verification of the order information 81 with data housing component 92. The data housing component may comprise electronic, paper or other information housing means and include: telephone books, demographic records, police records, tax records, county records, postal delivery records and others known to one skilled in the art. Upon confirmation, the notifying component 88 sends notice 83 to the receiving component 104, of the lender system, to provide factoring to the seller system. The factoring is sent 69 from factoring component 102 to (seller system) receiving component 64. The post system 80 further effects delivery of the good to a confirmed address provided in the order information, by notification 87 from the delivery component 86 to the forwarding component 122 of delivery system 120. The forwarding component communicates 73 with the forwarding and receiving component 78 of the buyer system to effect delivery. Should the e-buyer desire to return the good, the receiving and forwarding component 78 communicates these intentions and effects it via communication 75 with the delivering component 86 and forwarding component 122 (delivery system 120). The good is physically returned to a post selected address and then forwarded (85) to a disposal system 110 provided address for auctioning 102 or selling 104. If the goods are disposed of by the disposal system 110, funds from the same are forwarded 89 to the receiving component 104. If the goods are not disposed of, the good is returned 91 to the delivering component 86.

The invention being thus described, it. will be obvious that the same may be varied in many ways, including application of the present system to traditional brick and mortar stores. Such variations are not to be regarded as a departure from the spirit and scope of the invention, and all such modifications would be obvious to one skilled in the art are intended to be included within the scope of the following claims.

## Claims

1. A method for closed loop factoring between computers in a distributed environment, comprising the steps of:
- receiving an order for a good (65);
- generating confirmation of said order (84);
- requesting factoring (67); and
- receiving factoring based on said confirmation (69).

2. The method according to claim 1, wherein said confirmation is based on an exchange of information (71) between a client system (70) and a post system (80) satisfying a predetermined routine.

3. The method according to claim 2, wherein said routine comprises an exchange of client system identifier information (17) which identifies a customer for said good, an address for delivery of said good and payment information.

4. The method according to claim 2, wherein said routine further comprises the step of verifying said payment information with a database (81), said database operated by a third system (90).

5. The method according to claims 1-4, wherein said step of requesting factoring (67) further comprises the steps of:
- generating a request (67) by a seller system (60) for factoring;
- transmitting said request to a post system (80); and
- said post system (80) relaying said request for factoring (83) to a financial institution (100) after said post system (80) confirmed said order (71).

6. The method according to claims 1-5, wherein said order comprises an exchange of information (65) between client system (70) and seller system (60) and said step of generating confirmation (64) occurs concurrently with the exchange of information (65).

7. The method according to claim 6, wherein the post system (80) effects delivery of said good to a location indicated in said order after said step of generating a confirmation (84).

8. The method according to claim 7, further comprising the step of removing factoring in response to a returned good received at the post system (80) and forwarding the good from the post system (80) to the seller system (60).

9. The method according to claim 8, further comprising the step of selling a returned good by the post system (80).

10. The method according to claims 1-9, further comprising the steps of:
- notifying a financial institution about a returned good;
- keeping a record of returned goods and seller systems which sold the returned goods; and
- limiting factoring to the seller systems having a number of returned goods, the number exceeding a predetermined threshold.
